# FASCICULE DE BREVET EUROPEEN

(11) **EP 0 417 005 B1**
(45) Date de publication et mention de la délivrance du brevet: **31.08.1994**
(21) Numéro de dépôt: 90402452.8
(22) Date de dépôt: 06.09.1990
(51) Int. Cl.: B29C 45/46, B29B 13/02

(54) **Système pour injecter de la matière fondue dans un dispositif récepteur tel qu'un moule**
System zum Spritzgiessen eines geschmolzenen Materials in eine Aufnahmevorrichtung wie eine Form
System for injection moulding molten material into a receiving device such as a mould

(30) Priorité: 08.09.1989 FR 8911789
(43) Date de publication de la demande: 13.03.1991
(73) Titulaire: Hernandez, José, F-70160 Baulay en Haute-Saône (FR)
(72) Inventeur: Clement-Demange, Jean-Claude André, F-95000 Cergy (FR)
(74) Mandataire: Kiehl, Hubert

(56) Documents cités:
- AU-B- 514 078
- FR-A- 1 000 210
- FR-A- 2 225 113
- FR-A- 2 419 815

## Description

La présente invention se rapporte à un système pour injecter de la matière fondue dans un dispositif récepteur, tel qu'un moule.

Il est connu des systèmes pour injecter de la matière fondue qui comportent un fondoir pour fondre de la matière fusible, relié à un ou plusieurs dispositifs pour injecter la matière fondue, tels que par exemple un ou des pistolets, par un ou plusieurs tuyaux de communication ou tel que le système décrit dans l'exposé FR-A-2 419 815 correspondant au préambule de la revendication 1. Cependant, un tel système présente certains inconvénients. On peut entre autres citer les inconvénients d'encombrement et les risques d'oxydation de la matière fondue dans le fondoir et l'impossibilité de prendre manuellement les pistolets d'injection en raison de la température très élevée de ceux-ci.

La présente invention a pour objet un système pour injecter la matière fondue, par exemple dans un moule, qui pallie aux inconvénients ci-dessus.

Selon l'invention, le système est conforme à l'objet de la revendication 1.

D'autres caractéristiques de l'invention apparaissent dans les revendications dépendantes.

D'autres buts, détails et avantages de la présente invention apparaîtront plus clairement à la lecture de la description explicative qui va suivre faite en référence aux dessins dans lesquels :
La figure 1 est une perspective du système de la présente invention avec carter enlevé ;
La figure 2 est une vue en coupe longitudinale selon la ligne II-II de la figure 1, du système pour injecter de la matière fondue de la présente invention ; et
La figure 3 est une vue de dessus du système de la présente invention dans la direction de la flèche III de la figure 1.

Le système pour injecter de la matière fondue selon l'invention comporte un boîtier ou carter 1 dans lequel est disposé un corps fixe 2. Un dispositif 3 pour fondre de la matière fusible et un dispositif 4 pour injecter la matière fondue dans un moule sont montés dans le corps fixe 2, les deux dispositifs comportant respectivement une chambre de fusion 5 et une chambre d'injection 6 reliées par un canal de transfert 7 pour le transfert de la matière fondue contenue dans la chambre de fusion, dans la chambre d'injection. Le corps fixe 2 est disposé dans le carter 1 et est maintenu à une distance prédéterminée de la surface interne du carter 1 par des organes d'espacement 8 en laissant subsister un espace d'isolement thermique 9 entre les surfaces en regard du corps 2 et du carter 1.

Pour constituer le dispositif d'injection 4 de la présente invention, le corps 2 comprend un évidement cylindrique 12 dans lequel est monté axialement mobile un cylindre tubulaire formant tiroir 13 fermé du côté supérieur 14 orienté vers le moule et ouvert à son extrémité inférieure dans laquelle s'engage un élément formant piston 15 rendu solidaire du tiroir 13 par vissage en 16. Le piston 15 délimite à l'intérieur du cylindre tiroir 13 un espace qui forme la chambre d'injection précitée 6.

Le dispositif d'injection comprend une buse réalisée sous forme d'un tube 18 qui s'étend axialement à travers la partie supérieure et pleine 14 du cylindre tiroir 13 en étant solidaire de celle-ci. Ce tube s'étend par une extrémité dans la chambre d'injection 6 jusqu'à une certaine distance de la surface supérieure du piston 15 qui forme le fond 19 de la chambre d'injection 6. L'autre extrémité 21 du tube 18 sort en haut du corps 2, en traversant un organe formant bouchon 22 fermant en haut l'espace 12 du corps 2, pour être introduite dans le moule. Des parois latérales 23 cylindriques de la chambre 6 présentent au niveau du fond 19 des passages 24, par exemple au nombre de trois.

Pour pouvoir impartir au piston 15 et au cylindre tiroir 13 un mouvement de va-et-vient dans le corps 2, le piston 15 est intégré dans un ensemble vérin comprenant un élément cylindrique fixe 26 axialement aligné avec l'évidement 12 et dans lequel le piston est axialement mobile à l'encontre d'un ressort de rappel 27 en direction de l'évidement 12 sous l'effet d'un fluide sous pression introduit en 29 dans un espace 30 formant chambre de travail du vérin.

L'élément 26 est solidaire de l'extrémité inférieure du corps 2 avec interposition d'un joint d'étanchéité 31 et s'étend par une partie tubulaire 32 axialement dans l'intérieur du corps 2 pour former la surface cylindrique interne du dispositif d'injection, au niveau de la chambre d'injection 6. En effet l'évidement 12 du corps 2 est conformé dans une zone réceptrice de la partie tubulaire 32 de façon que les surfaces cylindriques internes de la partie 32 et de l'évidement 12 au-dessus de cette dernière soient axialement alignées, et qu'une chambre annulaire 34 soit formée autour de la partie 32 fermée en bas par la surface frontale 35, de l'élément 26.

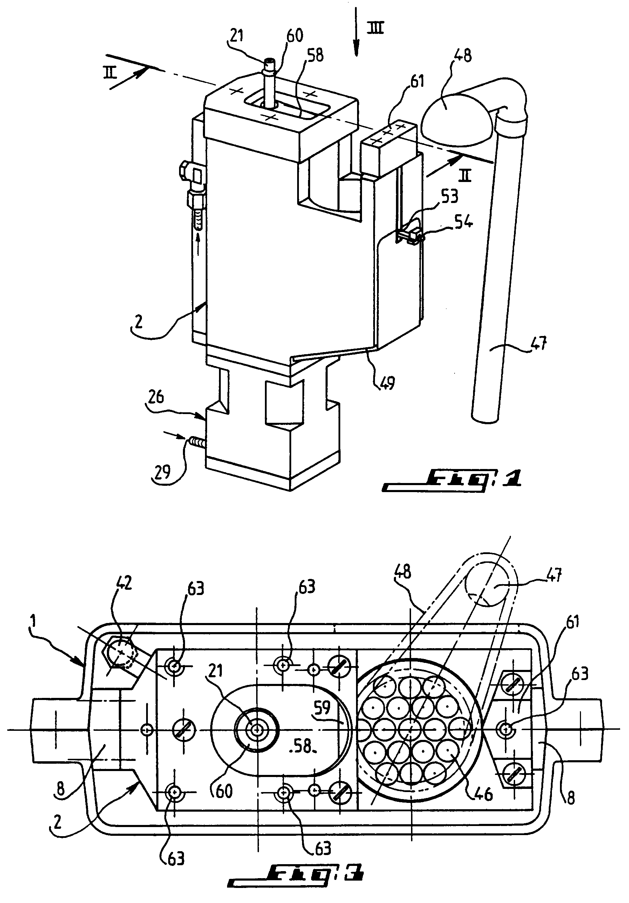

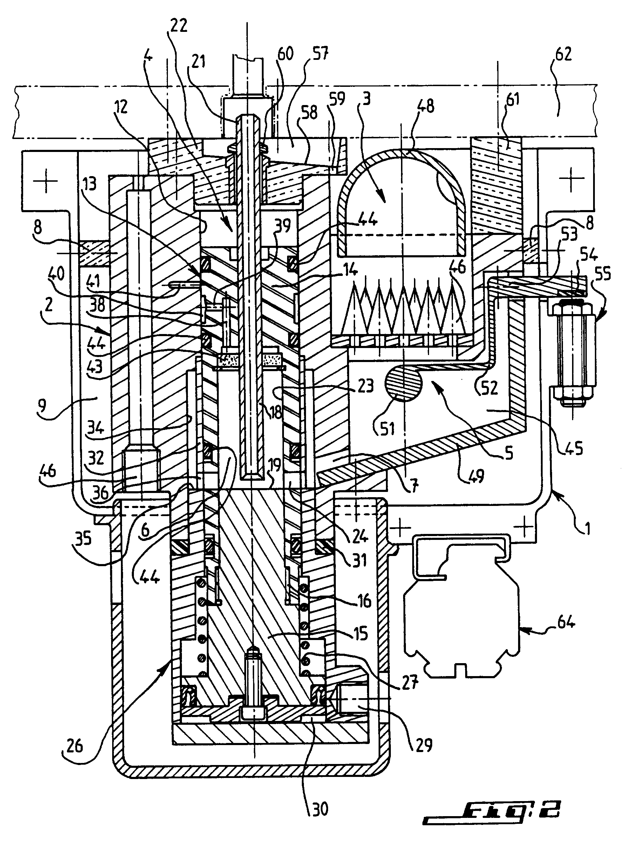

La surface frontale 35 de l'élément 26 se situe au niveau du fond 19 de la chambre 6 lorsque le piston 15 occupe sa position de repos, représentée à la figure 2.

La partie tubulaire 32 comporte dans sa paroi cylindrique des passages 36 qui se trouvent en regard des passages 24 dans la paroi du cylindre tiroir 13, dans la position représentée du dispositif d'injection. Ces passages 36 s'ouvrent dans l'espace annulaire 34 qui communique par le canal de transfert 7 avec la chambre de fusion 5. Le piston 15 est axialement déplaçable à partir de la position de repos représentée à la figure 1 sur une distance telle que les passages 36 soient obturés par une surface latérale externe du cylindre tiroir 13.

Le dispositif d'injection comprend des moyens de refoulement de la matière fondue de la chambre de fusion 6 dans le moule à travers le tube de buse 18 sous l'effet d'un fluide sous pression admis dans la chambre 6 par une conduite qui débouche dans la surface de la chambre 6 et qui présente une partie axiale 38 communiquant avec une conduite radiale 39 débouchant dans une gorge annulaire 40 dans la surface extérieure cylindrique de la partie supérieure 14 du cylindre tiroir 13. La gorge annulaire 40 est susceptible de venir en communication avec un canal radial 41 débouchant dans l'évidement 12 du corps 2 au dessus de la gorge 40 et relié par une portion de canal interne (non représentée) à une conduite 42 raccordée à une source de fluide sous pression (figure 2). L'ouverture du canal 41 et le bord supérieur de la gorge annulaire 40 sont séparés dans la direction axiale du cylindre tiroir 13 lorsque celui-ci occupe sa position de repos et viennent en communication dès l'obturation des passages 36 et ainsi du canal de transfert 7 par le cylindre tiroir 13.

Le dispositif de refoulement comporte en outre un diffuseur 43 qui est interposé dans la partie supérieure de la chambre d'injection 6 entre le niveau supérieur admissible de la matière fondue et l'arrivée de la conduite 38 dans la chambre d'injection 6.

On constate en outre la présence sur la partie 14 du cylindre tiroir 13 de deux bagues d'étanchéité 44 situées de part et d'autre de la gorge annulaire 40 ainsi que d'une troisième bague 44 dans la paroi de la chambre au dessus du passage 24. On constate encore qu'un trou AXIAL 46 est prévu dans le corps 2, destiné à recevoir un élément de chauffage tel que par exemple du type à cartouches de résistance blindées.

Le dispositif de fusion 3 comprend dans la chambre de fusion 5 au dessus d'une partie formant réservoir 45 de la matière fondue, un ensemble chauffant 46 réalisé sous forme d'un échangeur thermique à picots destiné à fondre de la matière fusible en granulés amenée par un agencement comprenant un tube flexible 47 situé à l'extérieur du carter 1 et un élément en forme de pipe 48 disposé au dessus de l'ensemble chauffant 46. Le fond de la chambre 5 et ainsi le fond du réservoir 45 sont formés par une plaque étanche 49 dont le fond est incliné de façon à descendre en direction du dispositif d'injection 4. La plaque 49 s'étend dans la paroi du corps 2 qui délimite l'évidement cylindrique 12, percée au niveau de l'extrémité de la plaque 49, par le canal de transfert 7 susmentionné.

Le système selon l'invention est équipé d'un dispositif de contrôle de son fonctionnement, qui comprend un flotteur 51 placé dans le réservoir 45, qui est fixé à une extrémité d'un levier 52 traversant la paroi extérieure du dispositif de fusion au niveau de la partie supérieure de la plaque 49 et articulée en 53 à cette paroi extérieure et dont l'autre extrémité qui, s'étend vers l'extérieur à travers le carter 1, porte un élément 54 faisant partie d'un dispositif détecteur de position 55 du type détecteur de proximité. Ce dispositif est adapté pour émettre un signal de commande lorsque le flotteur 51 se trouve dans des positions déterminées inférieure et supérieure. Dans le premier cas, le dispositif commande l'alimentation du dispositif de fusion 3 en matière fusible sous forme de granulés, et dans le deuxième cas, il commande l'envoi du fluide sous pression à travers la conduite 29 dans la chambre 30 du piston 15 du cylindre tiroir 13.

Il est encore à noter que le bouchon 22, avantageusement en céramique, de l'évidement 12 du dispositif d'injection 4 présente dans la partie de sortie 21 du tube de buse 18 un évidement 57 dont le fond 58 est incliné en direction de la chambre de fusion 5 avec laquelle il communique par un orifice 59. L'extrémité 21 du tube de buse 18 présente une collerette de déviation 60 de la matière fondue s'écoulant de l'extrémité 21 vers l'évidement 57.

Pour compléter la description, il est à noter que le corps 2 peut être fixé par un élément formant pilier 61 en céramique à un support, tel qu'une table schématiquement représentée en 62, à l'aide de vis dont les trous taraudés sont représentés en 63. Le carter 1 est encore équipé d'un dispositif 65 pour son montage sur un plan de travail (non représenté).

Il importe que l'ensemble du système à injecter de la présente invention soit disposé, en régime de fonctionnement, en position verticale.

On décrira ci-après le fonctionnement du système à injecter de la présente invention, tel que décrit ci-dessus.

Une quantité prédéterminée de matière fusible en granulés est amenée au dispositif de fusion 3 par l'intermédiaire du tube flexible 47 et l'élément formant pipe 48. La matière fusible est fondue par l'élément chauffant 46 en forme d'un échangeur thermique à picots, et la matière fondue ainsi obtenue descend dans le réservoir 45 par l'intermédiaire de trous situés entre les picots de l'échangeur thermique. Le canal de transfert 7 qui relie la chambre de fusion 5 et la chambre d'injection 6 étant ouvert, la matière fondue s'écoule du réservoir 45 vers la chambre d'injection 6 jusqu'à ce qu'un équilibre de niveau prédéterminé et contrôlé par le flotteur 51 soit atteint. A ce moment, un ordre pneumatique est donné et commande l'envoi de fluide sous pression à travers la conduite 29 qui permet d'élever le piston 15 vers le haut en armant le ressort de rappel 27. Dans son mouvement vertical, le piston 15 transmet son déplacement au cylindre formant tiroir 13 qui obture les orifices d'amenée 24 de la matière en fusion, rendant étanche la chambre d'injection 6 et entraînant le tube de buse flexible 18 en contact avec un point d'injection situé sur le moule avec une force supérieure à la somme des forces provenant du ressort 27 et de la contre-pression pouvant être exercée sur la matière contenue dans la chambre d'injection 6.

A ce moment, un deuxième ordre pneumatique est donné pour permettre d'amener le fluide sous pression par les conduites 42 et 41, par la gorge annulaire 40 et les conduites 38 et 39, jusqu'au diffuseur 43, réalisé en un matériau poreux tel que bronze fritté ou céramique. Ce dernier répartit la pression de la matière en fusion, sans créer de zones privilégiées de refroidissement, et sous la pression du fluide, la matière fondue monte dans le tube de buse 18 jusqu'au moule et le remplit.

Un ordre en provenance du moule arrête les deux ordres et met les tubes 29 et 42 à la pression atmosphérique. Sous l'action du ressort 27, le piston 15 et le cylindre tiroir 13 reviennent en position initiale ouvrant l'orifice 24 par lequel la matière stockée dans le réservoir 45 peut de nouveau alimenter la chambre d'injection 6 jusqu'à l'équilibre de niveau prédéterminé.

La quantité de matière fondue en réserve dans 45 est de une à deux fois égale à la quantité de la matière présente dans la chambre d'injection 6. Lorsque la consommation de matière fondue en un ou plusieurs cycles a fait baisser suffisamment le niveau de la matière dans le réservoir 45, le flotteur 51 déclenche le détecteur de position 55 qui donne l'ordre à un distributeur de granulés d'envoyer par voie pneumatique et par l'intermédiaire du tube flexible 47 de l'élément en forme de pipe 48, une charge en granulés de matière fusible prédéterminée. La matière fusible dispose d'un certain temps pour sa fusion et pour remettre le flotteur 51 en position haute. Les cycles peuvent alors recommencer.

Le système pour injecter de la matière dans un moule de la présente invention présente de nombreux avantages. En effet, le dispositif de fusion et le dispositif d'injection précités réunis dans un même carter présentent un faible encombrement, ce qui permet de disposer environ une quinzaine de systèmes semblables sur un poste de travail. Chacun de ces systèmes peut fonctionner à son propre débit grâce à l'automatisation de l'alimentation en granulés et du dosage de la quantité à injecter. D'autre part, grâce à l'automatisation de l'alimentation en matière fusible et du dosage de l'injection, il est possible d'éviter l'oxydation de la matière fondue. Enfin, le système contenu dans le carter est facilement préhensible grâce à l'isolation thermique par une couche d'air entre le carter et les dispositifs intégrés dans celui-ci ce qui permet d'une part d'abaisser la température du carter et permet d'autre part de réduire les pertes calorifiques par convexion et rayonnement dans le système. On peut encore noter que la disposition verticale évite la présence d'un clapet obturateur au bout du tube de buse flexible et qu'en cas de coulée de matière fondue lors de l'injection, celle-ci peut redescendre dans le réservoir de matière fondue.

Le système selon l'invention peut utiliser des polymères et plus particulièrement des colles fusibles ce qui permet d'encoller un produit. Le système de l'invention est utilisé pour réaliser des surmoulages sur des objets longs et encombrants, tels que des faisceaux de câbles, pour l'étanchéification de connecteurs etc ... .

Il est bien évident que de nombreuses modifications peuvent être apportées à l'invention. Par exemple, on pourrait prévoir plusieurs chambres de fusion reliées à une seule chambre d'injection, ce qui permettrait d'accroître la vitesse de remplissage de la chambre d'injection, et donc d'accélérer la cadence des cycles de moulage.

## Revendications

1. Système pour injecter de la matière fondue dans un dispositif récepteur tel qu'un moule du type comportant un dispositif (3) pour fondre de la matière fusible comprenant une chambre de fusion et un dispositif d'injection (4) de la matière fondue comprenant un corps cylindrique creux (13) délimitant une chambre d'injection ayant un orifice de sortie de refoulement de la matière fondue de la chambre d'injection dans le moule, le corps cylindrique formant tiroir étant axialement mobile dans un corps d'enveloppe fixe (2) et des moyens de refoulement de la matière fondue dans le moule, les chambres de fusion et d'injection étant disposées parallèlement et communiquant entre elles par un canal de transfert comportant des portions traversant les parois latérales du corps mobile et du corps d'enveloppe, la communication étant établie ou interrompue dès que la portion du canal de corps mobile est en regard ou non de la portion de canal d'enveloppe, caractérisé en ce que les chambres de fusion (5) et d'injection (6) sont juxtaposées et communiquent à leur base par le canal de transfert (7), ce dernier débouchant à proximité du fond de ladite chambre d'injection (6) à une faible distance au-dessus du fond de la chambre d'injection (6) de façon qu'à un faible déplacement du corps mobile vers le haut, celui-ci se trouve en position d'obturation du canal de transfert (7) et en ce que les moyens de refoulement de la matière fondue dans le moule comprennent des moyens d'amenée d'un fluide sous pression dans la chambre d'injection pour le refoulement de la matière fondue hors de la chambre d'injection par son orifice de sortie pour l'injection vers le haut de la matière fondue dans le moule.

2. Système selon la revendication 1, caractérisé en ce qu'il comprend un dispositif (51 à 55) pour assurer le contrôle du remplissage de la chambre d'injection (6) et le déclenchement du dispositif d'injection (4) lorsque la chambre d'injection (6) contient une quantité prédéterminée de matière fondue à injecter.

3. Système selon la revendication 2, caractérisé en ce que le dispositif pour assurer le contrôle du remplissage de la chambre d'injection (6) et le déclenchement de l'injection, comprend un flotteur (51) disposé dans la chambre de fusion (5).

4. Système selon la revendication 3, caractérisé en ce que le flotteur (51) est fixé à une extrémité à un dispositif levier (52) monté pivotant dans la paroi de la chambre de fusion (en 53) et dont l'autre extrémité porte des moyens faisant partie d'un détecteur de position (55) auquel est associé un dispositif générateur de signaux de commande du système.

5. Système selon la revendication 4, caractérisé en ce que le dispositif détecteur (55) est adapté pour détecter une position de niveau inférieur flotteur (51) et pour produire un signal de commande d'alimentation en matière fusible du dispositif de fusion (3) et une position de niveau supérieur du flotteur (51) donnant lieu à la production d'un signal de commande pour l'obturation du canal de transfert (7).

6. Système selon la revendication 1, caractérisé en ce que les moyens de refoulement comportent une buse d'injection en forme d'un tube (18) solidaire du cylindre tiroir (13) et s'étendant axialement dans celui-ci et dont une extrémité débouche à l'extérieur du dispositif d'injection (4) tandis que son autre extrémité s'étend dans la chambre d'injection (6) jusqu'à un certain niveau au-dessus du fond (19) de la chambre d'injection (6), en ce que l'espace dans la chambre au-dessus du niveau de matière fondue est susceptible d'être relié à une source d'un fluide sous pression de refoulement de la matière fondue de ladite chambre à travers le tube dans le moule.

7. Système selon la revendication 6, caractérisé en ce que les moyens de refoulement comportent de plus un diffuseur (43) disposé dans l'espace précité entre l'arrivée du fluide sous pression et la matière fondue.

8. Système selon l'une des revendications précédentes, caractérisé en ce que le cylindre tiroir (13) est déplaçable axialement par un fluide sous pression à l'encontre d'un ressort de rappel (27) vers sa position d'obturation.

9. Système selon l'une des revendications précédentes, caractérisé en ce que la chambre de fusion (5) comporte un réservoir (45) de la matière fondue qui communique par l'intermédiaire du canal de transfert (7) avec la chambre d'injection (6) et un ensemble (46) pour la fusion situé au-dessus dudit réservoir (45) qui reçoit la matière fusible.

10. Système selon l'une des revendications 6 à 9, caractérisé en ce que le dispositif de déclenchement de l'injection comprend des moyens de commande de l'établissement de la connexion de l'espace précité de la chambre d'injection (6) à la source de fluide sous pression précitée lorsque le cylindre tiroir (13) atteint une position prédéterminée après l'obturation des passages (36) dans la paroi du corps fixe précité.

11. Système selon la revendication 10, caractérisé en ce que le cylindre tiroir (13) comporte à sa surface cylindrique externe une gorge annulaire (40) qui est reliée par un canal interne (38, 39) à l'espace précité, en ce que le corps fixe (2) présente dans sa surface cylindrique interne un orifice (41) relié à la source sous pression et en ce que la gorge (40) et l'orifice (41) sont situés de telle façon que la gorge (40) vienne en regard de l'orifice (41) après l'obturation des passages (36) par le cylindre tiroir (13).

12. Système selon l'une des revendications précédentes, caractérisé en ce que les dispositifs (3 et 4) font partie d'un même corps (2) monté dans le boîtier (1) en laissant subsister un espace (9) assurant une isolation thermique.

13. Système selon l'une des revendications précédentes, caractérisé en ce que l'extrémité supérieure de la buse d'injection (18) est entourée d'une collerette (60) de déviation de la coulée de matière fondue dans un évidemment (57) en communication avec le dispositif de fusion (3).

## Claims

1. System for injection moulding molten material into a receiving device such as a mould of the type comprising a device (3) to melt the fusible material including a melting chamber and an injection device (4) for the molten material with a hollow cylindrical body (13) marking out an injection chamber with an outlet discharge orifice for the molten material from the injection chamber into the mould, the cylindrical body which forms a drawer being axially mobile in a fixed casing body (2) and means of discharging the molten material into the mould, the melting and injection chamber being located in parallel and communicating with one another by a transfer channel comprising portions which cross the lateral walls of the mobile body and the casing body, the communication being made or interrupted as soon as the portion of the channel of the mobile body is facing or not facing the portion of the casing channel, characterised in that the melting (5) and injection (6) chambers are juxtaposed and communicate at their bases by means of the transfer channel (7), the latter opening in the proximity of the base of the said injection chamber (6) at a short distance above the base of the injection chamber (6) so that by moving the mobile body slightly upwards, it is located in a position to seal the transfer channel (7) and in that the discharge means for the molten material into the mould comprise means to bring in a pressurized fluid into the injection chamber to discharge the molten material to the outside of the injection chamber through its outlet orifice injecting the molten material upwards into the mould.

2. System according to claim 1, characterised in that it comprises a device (51 to 55) to guarantee that the filling of the injection chamber (6) is controlled and that the injection device (4) is triggered when the injection chamber (6) contains a predetermined quantity of molten material to be injected.

3. System according to claim 2 characterised in that the device guaranteeing that the filling of the injection chamber (6) is controlled and that the injection is triggered, comprises a float (51) located in the melting chamber (5).

4. System according to claim 3 characterised in that the float (51) is fixed at one extremity to a lever device (52) assembled to pivot in the wall of the melting chamber (in 53) and whose other extremity has means which are part of a position detector (55) to which is linked a signal generator device to command the system.

5. System according to claim 4, characterised in that the detector device (55) is adapted to detect a position below the float (51) and to produce a command signal to supply the melting device (3) with fusible material and to detect a position above the float (51) giving rise to a command signal which seals the transfer channel (7).

6. System according to claim 1, characterised in that the discharge means comprise an injection nozzle in the form of a tube (18) which is solid with the drawer cylinder (13) and which extends axially into it and whose extremity opens to the outside of the injection device (4) whilst its other extremity extends into an injection chamber (6) up to a certain level above the base (19) of the injection chamber (6) so that the space in the chamber above the level of the molten material can be linked to a source of pressurized discharge fluid of molten material from the said chamber through the tube into the mould.

7. System according to claim 6, characterised in that the discharge means also comprise a diffuser (43) located in the previously mentioned space between the inlet of the pressurized fluid and the molten material.

8. System according to one of the previous claims, characterised in that the drawer cylinder (13) can be moved axially by a pressurized fluid against a release spring (27) towards its sealing position.

9. System according to one of the previous claims, characterised in that the melting chamber (5) comprises a reservoir (45) of molten material which communicates by means of the transfer channel (7) with the injection chamber (6) and an assembly (46) for the melt located above the said reservoir (45) which receives the fusible material.

10. System according to one of claims 6 to 9, characterised in that the injection triggering device comprises command means to establish the connection between the above-mentioned space in the injection chamber (6) and the source of pressurized fluid mentioned above when the drawer cylinder (13) reaches a predetermined position after sealing the passages (36) in the wall of the fixed body mentioned hereinabove.

11. System according to claim 10, characterised in that the drawer cylinder (13) comprises on its outer cylindrical surface an annular groove (40) which is connected by an internal channel (38, 39) to the space mentioned hereinabove, in that the fixed body (2) has, on its inner cylindrical surface, an orifice (41) linked to the pressurized source and in that the groove (40) and the orifice (41) are located so that the groove (40) is facing the orifice (41) after sealing the passages (36) by means of the drawer cylinder (13).

12. System according to one of the previous claims, characterised in that the devices (3 and 4) are part of a same body (2) assembled in the box (1) leaving free a space (9) which provides thermal insulation.

13. System according to one of the previous claims, characterised in that the upper extremity of the injection nozzle (18) is circled by a collar (60) to divert the flow of the molten material into a cavity (57) whilst communicating with the melting device (3).

## Patentansprüche

1. System zum Spritzgießen eines geschmolzenen Materials in eine Aufnahmevorrichtung, wie eine Form, umfassend eine Schmelzvorrichtung (3) für das schmelzbare Material, welche eine Schmelzkammer enthält, und eine Spritzgießvorrichtung (4) für das geschmolzene Material, welche einen zylindrischen Hohlkörper (13) enthält, der eine Spritzgießkammer mit einer Ausgangsöffnung zur Beförderung des geschmolzenen Materials aus der Spritzgießkammer in die Form begrenzt, wobei der zylindrische Körper einen Schieber bildet, der in Längsrichtung in einem feststehenden Hüllkörper (2) bewegbar ist, sowie Mittel zur Beförderung des geschmolzenen Materials in die Form, wobei die Schmelz- und Spritzgießkammern parallel angeordnet sind und durch einen Überleitungskanal miteinander verbunden sind, der Teile umfaßt, welche durch die Seitenwände des beweglichen Körpers und des Hüllkörpers hindurchgehen, wobei die Verbindung hergestellt oder unterbrochen wird, wenn das Kanalteil des beweglichen Körpers dem Kanalteil der Hülle gegenüberliegt bzw. nicht gegenüberliegt, dadurch gekennzeichnet, daß die Schmelz- (5) und Spritzgießkammern (6) nebeneinanderliegen und an ihrer Basis durch den Überleitungskanal (7) miteinander in Verbindung stehen, wobei dieser in der Nähe des Bodens der Spritzgießkammer (6) mit einem geringen Abstand oberhalb des Bodens der Spritzgießkammer (6) derart mündet, daß er sich bei einer geringen Verschiebung des beweglichen Körpers nach oben in einer Verschlußposition des Überleitungskanals (7) befindet, und daß die Mittel zur Beförderung des geschmolzenen Materials in die Form Zufuhrmittel für ein Druckfluid in die Spritzgießkammer umfassen, welche das geschmolzene Material aus der Spritzgießkammer durch deren Ausgangsöffnung zum Spritzgießen des geschmolzenen Materials nach oben in die Form befördern.

2. System nach Anspruch 1, dadurch gekennzeichnet, daß es eine Vorrichtung (51 bis 55) umfaßt, welche die Steuerung der Befüllung der Spritzgießkammer (6) und die Auslösung der Spritzgießvorrichtung (4) gewährleistet, wenn die Spritzgießkammer (6) eine vorgegebene Menge an geschmolzenem Material für das Spritzgießen enthält.

3. System nach Anspruch 2, dadurch gekennzeichnet, daß die Vorrichtung zur Steuerung der Befüllung der Spritzgießkammer (6) und der Auslösung des Spritzgießens einen Schwimmer (51) umfaßt, der in der Schmelzkammer (5) angeordnet ist.

4. System nach Anspruch 3, dadurch gekennzeichnet, daß der Schwimmer (51) an einem Ende an einer Hebelvorrichtung (52) befestigt ist, die in der Wand der Schmelzkammer (bei 53) schwenkbar befestigt ist, und an seinem anderen Ende Mittel trägt, die Teil eines Positionsdetektors (55) sind, mit dem eine Systemsteuerung-Signalgebervorrichtung verbunden ist.

5. System nach Anspruch 4, dadurch gekennzeichnet, daß die Detektorvorrichtung (55) für den Nachweis einer unteren Standposition des Schwimmers (51) und zur Erzeugung eines Steuerungssignals für die Zufuhr von schmelzbarem Material von der Schmelzvorrichtung (3) ausgebildet ist und eine obere Standposition des Schwimmers (51) die Erzeugung eines Steuersignals für den Verschluß des Überleitungskanals (7) veranlaßt.

6. System nach Anspruch 1, dadurch gekennzeichnet, daß die Beförderungsmittel eine Spritzdüse in Form eines Rohres (18) umfassen, das an dem Schiebezylinder (13) befestigt ist und sich innerhalb diesem in Längsrichtung erstreckt, von welchem ein Ende außerhalb der Spritzgießvorrichtung (4) mündet, während sein anderes Ende sich in die Spritzgießkammer (6) bis zu einem gewissen Niveau oberhalb des Bodens (19) der Spritzgießkammer (6) erstreckt, und daß der Raum in der Kammer über dem Niveau des geschmolzenen Materials zur Verbindung mit einer Druckfluidquelle geeignet ist, um das geschmolzene Material aus dieser Kammer durch das Rohr in die Form zu befördern.

7. System nach Anspruch 6, dadurch gekennzeichnet, daß die Beförderungsmittel ferner einen Diffusor (43) umfassen, der in dem vorgenannten Raum zwischen dem Einlaß des Druckfluids und dem geschmolzenen Material angeordnet ist.

8. System nach einem der vorangehenden Ansprüche, dadurch gekennzeichnet, daß der Schiebezylinder (13) in Längsrichtung durch ein Druckfluid gegen die Wirkung einer Rückstellfeder (27) in seine Verschlußposition verschiebbar ist.

9. System nach einem der vorangehenden Ansprüche, dadurch gekennzeichnet, daß die Schmelzkammer (5) einen Behälter (45) für geschmolzenes Material umfaßt, der durch den Überleitungskanal (7) mit der Spritzgießkammer (6) und einer Anordnung (46) für das Schmelzen in Verbindung steht, die oberhalb des Behälters (45) angeordnet ist und das schmelzbare Material aufnimmt.

10. System nach einem der Ansprüche 6 bis 9, dadurch gekennzeichnet, daß die Vorrichtung zur Auslösung des Spritzgießens Steuerungsmittel umfaßt, welche die Verbindung zwischen dem vorgenannten Raum der Spritzgießkammer (6) und der Druckfluidquelle herstellen, wenn der Schiebezylinder (13) eine vorgegebene Position nach dem Verschluß von Durchgängen (36) in der Wand des vorerwähnten feststehenden Körpers erreicht.

11. System nach Anspruch 10, dadurch gekennzeichnet, daß der Schiebezylinder (13) an seiner zylindrischen Außenfläche eine ringförmige Auskehlung (40) umfaßt, die durch einen inneren Kanal (38, 39) mit dem obengenannten Raum verbunden ist, daß der feststehende Körper (2) in seiner zylindrischen Innenfläche eine Öffnung (41) aufweist, die mit der Druckfluidquelle verbunden ist, und daß die Auskehlung (40) und die Öffnung (41) derart angeordnet sind, daß die Auskehlung (40) nach dem Verschluß der Durchgänge (36) durch den Schiebezylinder (13) der Öffnung (41) gegenüberliegt.

12. System nach einem der vorangehenden Ansprüche, dadurch gekennzeichnet, daß die Vorrichtungen (3 und 4) Teil desselben Körpers (2) sind, der in einem Gehäuse (1) angebracht ist, wobei ein Raum (9) bestehen bleibt, welcher für eine Wärmeisolierung sorgt.

13. System nach einem der vorangehenden Ansprüche, dadurch gekennzeichnet, daß das äußere Ende der Spritzdüse (18) von einem Flansch (60) umgeben ist, der den Guß des geschmolzenen Materials in eine Aussparung (57) lenkt, die mit der Schmelzvorrichtung (3) in Verbindung steht.
